# EUROPEAN PATENT SPECIFICATION

(11) **EP 3 419 163 B1**
(45) Date of publication and mention of the grant of the patent: **18.08.2021**
(21) Application number: 18178978.5
(22) Date of filing: 21.06.2018
(51) Int. Cl.: H02P 29/024, B62D 5/04

(54) **DETECTION APPARATUS**
DETEKTIONSVORRICHTUNG
APPAREIL DE DÉTECTION

(30) Priority: 23.06.2017 JP 2017123429
(43) Date of publication of application: 26.12.2018
(73) Proprietor: AISIN SEIKI KABUSHIKI KAISHA, Kariya-shi, Aichi-ken, 448-8650 (JP)
(72) Inventor: AOYAMA, Satoshi, KARIYA-SHI, AICHI-KEN 448-8650 (JP); TSUJI, Takeru, KARIYA-SHI, AICHI-KEN 448-8650 (JP)
(74) Representative: Cabinet Beau de Loménie

(56) References cited:
- JP-A- 2009 055 657
- US-A1- 2012 032 625
- US-A1- 2014 055 887

## Description

### TECHNICAL FIELD

This disclosure generally relates to a detection apparatus detecting whether a switch which allows a three-phase motor and an inverter to be disconnected from each other is in a short-circuit state. The switch is inserted into each of three bus bars in a serial manner. The three bus bars are each connecting the three-phase motor and the inverter which drives the three-phase motor and which includes three sets of arm portions each including a high-side switching element and a low-side switching element being connected with each other in a serial manner between a first power supply line and a second power supply line that is connected at an electric potential lower than an electric potential of the first power supply line.

### BACKGROUND

A known inverter is used to drive a three-phase motor. By a nature of a product, a system provided in a vehicle may include a redundant configuration (a dual system configuration) in which two inverters and two three-phase motors are provided per system. In such system, each one of the dual system is usually controlled to output fifty percent of required output (for example, output torque of the three-phase motor). In a case where the abnormality is determined at one of the dual system, the other of the dual system (the system in which the abnormality is not determined) is controlled to output a hundred percent, or 100 % of the required output.

When the one of the dual system in which the abnormality is not determined is controlled to output 100 % of the required output, the three-phase motor which performs the output operation is applied with an unexpected load if the three-phase motor having the abnormality includes a path in which a current flows. Accordingly, additional energy is required to maintain the function of the system. Here, such dual system includes a circuit configuration in which a switch that allows the disconnection between the three-phase motor and an inverter is provided at each of three bus bars connecting the three-phase motor and the inverter, and in a case where the abnormality is determined, the connection between the three-phase motor and the inverter in which the abnormality is determined is immediately released to cut off the current path.

However, in a case where the switch is short-circuited despite of being controlled so as to be open, the current path from the inverter to the three-phase motor is recognized, and accordingly, the three-phase motor in which the abnormality is determined cannot be separated electrically from the three-phase motor in which the abnormality is not determined. Accordingly, an apparatus that may determine (detect) a fault of the switch in advance (for example, when the vehicle starts the operation) is required. An apparatus disclosed in JP2009-55657A (hereinafter referred to as Patent reference 1) discloses a technology detecting the fault of the switch.

In Patent reference 1, a control device of a motor controlling the motor including a motor drive circuit (corresponding to the inverter of the disclosure) is disclosed. The control device of the motor is configured to include a relay (corresponding to a switch of the disclosure) in each of three bus bars connecting the motor drive circuit and the motor.

In the technology disclosed in Patent reference 1, the determination of whether the relay is abnormally operated is required to be operated based on the determination of whether a voltage of a terminal of a phase reaches a predetermined value by the operation of the three relays sequentially. Thus, the abnormality of the relay cannot be detected speedily and easily.

A need thus exists for a detection apparatus that may quickly and easily detect whether a switch which allows a disconnection between a three phase motor and an inverter is abnormally operated.

### SUMMARY

The invention is defined in the appended set of claims.
According to an aspect of the disclosure, a detection apparatus is for detecting whether a switch which allows a three-phase motor and an inverter to be disconnected from each other is in a short-circuit state. The switch is inserted into each of three bus bars in a serial manner. The three bus bars each connecting the three-phase motor and the inverter which drives the three-phase motor and which includes three sets of arm portions each including a high-side switching element and a low-side switching element being connected with each other in a serial manner between a first power supply line and a second power supply line that is connected at an electric potential lower than an electric potential of the first power supply line. The detection apparatus includes a switch determination resistor, a detection portion (or detection unit) and a determination portion (or determination unit). The switch determination resistor is provided between the first power supply line and at least one of three terminals included in the three-phase motor. The detection portion is configured to detect voltages of terminals which are included in the three switches, respectively, and which are connected to the inverter. The determination portion is configured to previously memorize the voltages of the terminals of the three switches being acquired in a state where the three switches are in an open state. The determination portion is configured to determine the switch in the short-circuit state in the three switches based on the voltages of the terminals of the three switches which are previously memorized and a detection result of the detection portion in a case where the three switches are controlled to be in the open state.

According to the aforementioned characteristic configuration, the detection portion may detect the short circuit of the switch by the determination of whether a difference between the previously-memorized voltage of the terminal and the detection result of the detection portion is within a predetermined range when the switch allowing the three phase motor and the inverter to be disconnected from each other is set in the open state. Accordingly, according to the characteristic configuration, whether the switch is abnormally operated or not will be detected quickly and easily.

According to an aspect of this disclosure, the detection apparatus further includes an inverter determination resistor being arranged between the first power supply line and the terminals which are included in the three switches, respectively, and which are connected to the inverter.

According to the aforementioned configuration, the detection portion may detect the short circuit of the high-side switching elements and the low-side switching elements by the determination of whether the difference between the previously-memorized terminal and the detection result detected by the detection portion is within the predetermined range in a case where all of the high-side switching elements and the low side switching elements included in the inverter are set in the open state.

According to an aspect of this disclosure, the voltages of the terminals being previously memorized are set at different values from one another per phase of the three-phase motor.

According to the aforementioned configuration, the detection portion may easily detect whether the three-phase motor and the bus bar are appropriately connected with each other, or whether a coil is broken within the three-phase motor based on the detection result of the detection portion in a case where the switch is controlled in the short-circuit state.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a circuit diagram illustrating a configuration of a detection apparatus according to a first embodiment disclosed here; and
Fig. 2 is a circuit diagram illustrating a configuration of a detection apparatus according to a second embodiment disclosed here.

### DETAILED DESCRIPTION

A detection apparatus of a disclosure in a first embodiment includes a function detecting whether a switch is short-circuited, the switch which is serially inserted into each of three bus-bars that each connects a three-phase motor and an inverter, and which allows the disconnection between the three-phase motor and the inverter.

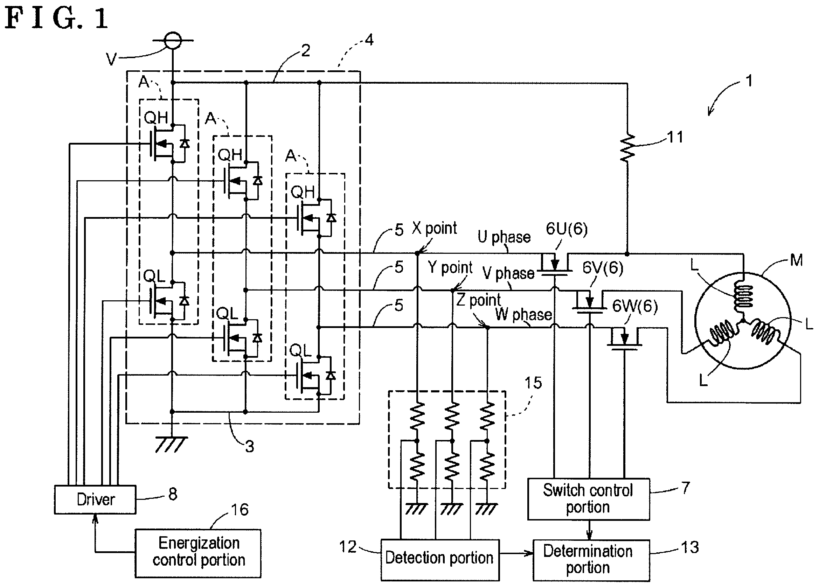

As illustrated in Fig. 1, a detection apparatus 1 of the disclosure includes a switch determination resistor 11, a detection portion (or detection unit) 12, and a determination portion (or determination unit) 13. The detection apparatus 1 detects whether switches 6 are in a short-circuit state, the switches 6 which are inserted into three bus bars 5, respectively, connecting a three-phase motor M and an inverter 4 in a serial manner, and which allow disconnection between the three-phase motor M and the inverter 4. In the disclosure, Fig. 1 illustrates the three-phase motor M including a Y connection, however, which is an example, and alternatively, the three-phase motor M may include a delta connection.

The inverter 4 drives the three-phase motor M, and is provided with three sets of arm portions A each including a high side switching element QH and a low side switching element QL that are serially connected with each other between a first power supply line 2 and a second power supply line 3 which is connected to the first power supply line 2 at an electric potential lower than the electric potential of the first power supply line 2. The first power supply line 2 corresponds to a cable connected to a power supply V. The second power supply line 3 connected to the electric potential lower than the electric potential of the first power supply line 2 corresponds to a cable to which an electric potential lower than an output voltage of the power supply V is applied, and corresponds to a grounded cable in the disclosure.

The inverter 4 includes the three sets of the arm portions A. Each of the arm portions A is provided such that one of the high side switching elements QH and one of the low side switching elements QL are connected with each other in a serial manner. In the first embodiment, a metal-oxide-semiconductor field-effect transistor, or MOSFET is used for the high side switching element QH and the low side switching element QL. A drain terminal of the high-side switching element QH of the arm portion A is connected to the first power supply line 2, and a source terminal of the high side switching element QH and the drain terminal of the low side switching element QL are connected with each other. A source terminal of the low side switching element QL of the arm portion A is connected to the second power supply line 3. A gate terminal of the high side switching element QH and a gate terminal of the low side switching element QL are connected to a driver 8.

The driver 8 is provided between an energization control portion 16 and the inverter 4, and is inputted with a pulse width modulation signal, or a PWM signal, generated by the energization control portion 16. The driver 8 enhances a drivability of the inputted PWM signal and outputs the PWM signal to the inverter 4. The energization control portion 16 generates the PWM signal and performs the PWM control to the inverter 4.

The source terminal of the high side switching element QH of the arm portion A is connected to each of three coils L included in the three-phase motor M via the bus bar 5. In the first embodiment, because the three-phase motor M is provided, three of the bus bars 5 are provided. Each of the bus bars 5 is provided with a switch 6 in a serial manner. In the first embodiment, a n-type MOSFET is used for the switch 6. A source terminal of the switch 6 is connected to the inverter 4, and a drain terminal of the switch 6 is connected to the three-phase motor M. A gate terminal of the switch 6 is connected to a switch control portion 7 controlling the opening and closing of the switch 6. The switch control portion 7 controls the opening and closing of the switch 6 to allow each of the three bus bars 5 to be in one of an open state and in a short-circuit state.

In the dual-system configuration in which the two inverters 4 and the two three-phase motors M are provided per system, in a case where the abnormality is determined at one of the dual system, the switch 6 releases the connection between the three-phase motor M and the inverter 4 to cut off a current path of the one of the dual system (in which the abnormality is determined). Accordingly, the detection apparatus 1 is configured to detect whether the switch 6 is in a short-circuit state (hereinafter referred to as a short circuit) despite that the switch 6 is controlled to be open and closed appropriately, more specifically, to be in an open state. The configuration of the detection apparatus 1 will hereunder be explained. For facilitating the understanding, the switch 6 provided at the U-phase bus bar 5 is referred to as a switch 6U, the switch 6 provided at the V-phase bus bar 5 is referred to as a switch 6V, and the switch 6 provided at the W-phase bus bar 5 is referred to as a switch 6W for distinguishing the three switches 6.

A switch determination resistor 11 is arranged between the first power supply line 2 and at least one of the three terminals included in the three-phase motor M. The first power supply line 2 corresponds to the cable connected to the power supply V. At least one of the three terminals included in the three-phase motor M corresponds to a terminal of at least one of three coils L excluding a neutral point of the Y connection three-phase motor M. For facilitating the understanding, when the three bus bars 5 are arranged in the order of the U-phase bus bar, V-phase bus bar, and W-phase bus bar from the top of the page in Fig. 1, the terminal of the U-phase coil L is shown in Fig. 1 in the first embodiment. Accordingly, the switch determination resistor 11 in the first embodiment is provided to connect the power supply V and the U-phase coil L electrically. That is, the switch determination resistor 11 pulls up the voltage of the drain terminal of the switch 6U to the output voltage of the power supply V.

The switch determination resistor 11 detects whether the switch 6 which is controlled to be in the open state is in a short-circuit state so that it is favorable that the switch determination resistor 11 includes a great amount of resistor value (for example, from kilo ohms to hundred kilo ohms) for inhibiting the decrease of the efficiency in normal operation.

A detection portion 12 detects voltages of terminals which are included in the three switches 6, respectively, and which are connected to the inverter 4. The voltages of the terminals which are included in the three switches 6, respectively, and which are connected to the inverter 4 correspond to voltages of the three bas bars 5 arranged between the inverter 4 and the switches 6, that is, the voltages of the source terminals of the switches 6. Accordingly, the detection portion 12 detects the voltage of the source terminal of the switch 6. In the example shown in Fig. 1, the voltage of the source terminal of the switch 6 detected by the detection portion 12 corresponds to a value of a voltage divided by a resistor group 15 (specifically, the value divided by two resistors). Alternatively, the detection portion 12 may detect the voltage of the source terminal of the switch 6 without the division of the voltage by the resistor group 15, depending on the specification of the detection portion 12.

The determination portion 13 previously memorizes the voltages of the terminals of the three switches 6 acquired in a state where the three switches 6 are in the open state, and determines the switch 6 (of the three switches 6) in a short-circuit state based on the voltages of the terminals of the switches 6 which are previously memorized and the detection result of the detection portion 12 in a case where the three switches 6 are controlled to be in the open state. The voltage of the terminal when the three switches 6 are in the open state corresponds to a voltage of the source terminal of the switch 6 when the switch 6 is in the open state while not being in a short-circuit state. In a case where the high side switching element QH and the low side switching element QL are not operated (in a case where the switch 6 is in an open state), the voltage of the source terminal of the switch 6 corresponds to zero volt. Accordingly, the determination portion 13 of the first embodiment previously memorizes zero volt as a voltage of a terminal in a case where the three switches are in the open state.

When the switch control portion 7 controls the three switches 6 to be in the open state, the voltage of the source terminal of the switch 6 corresponds to zero when the three switches 6 are not short-circuited. This detection is operated by the detection portion 12. Thus, the determination portion 13 determines that the three switches 6 are not short-circuited because the voltage previously memorized is not differed from the detection result of the detection portion 12. The detection result may include errors by, for example, the superimposition of the noise, when the detection portion 12 operates. Here, the determination portion 13 may be configured to determine that the short circuit does not occur in a case where the difference of the voltage preciously memorized and the detection result of the detection portion 12 is equal to or lower than a predetermined value that is set in consideration of detection errors.

On the other hand, when the switch 6U causes the short circuit, despite that the switch control portion 7 controls the three switches 6 to be in the open state, the electric potential of a X point (a source terminal of the switch 6U) corresponds to greater than zero volt via the switch determination resistor 11. Accordingly, the determination portion 13 determines that the switch 6U causes the short circuit because the difference between the voltage previously memorized and the detection result of the detection portion 12 corresponds to greater than the predetermined value.

When the switch 6V causes the short circuit despite that the switch control portion 7 controls the three switches 6 to be in the open state, the electric potential of a Y point (a source terminal of the switch 6V) corresponds to greater than zero volt via the switch determination resistor 11 and the coil L of the three-phase motor M. Thus, the determination portion 13 determines that the switch 6V causes the short circuit because the difference of the voltage previously memorized and the detection result of the detection portion 12 corresponds to greater than the predetermined amount.

Moreover, when the switch 6W causes the short circuit despite that the switch control portion 7 controls the three switches 6 to be in the open state, the electric potential of a Z point (a source terminal of the switch 6W) corresponds to greater than zero volt via the switch determination resistor 11 and the coil L of the three-phase motor M. Thus, the determination portion 13 determines that the switch 6W causes the short circuit because the difference of the voltage previously memorized and the detection result of the detection portion 12 corresponds to greater than the predetermined amount.

As such, the detection apparatus 1 may detect (specify) the switch 6 that causes the short circuit without controlling the three switches 6 to be in the short-circuit state.

Next, a second embodiment of a detection apparatus 101 of the disclosure will hereunder be explained. The detection apparatus 1 according to the first embodiment includes the function detecting whether the switch 6 is in the short-circuit state, the switch 6 that is inserted in each of the three bus bars 5 connecting the three phase motor M and the inverter 4 in a serial manner, and that allows the three-phase motor M and the inverter 4 to be disconnected from each other. Alternatively, the detection apparatus 101 of the second embodiment includes a function detecting whether, in addition to the switch 6, the switching element (the high-side switching element QH and the low-side switching element QL) included in the inverter 4 is in the short-circuit state.

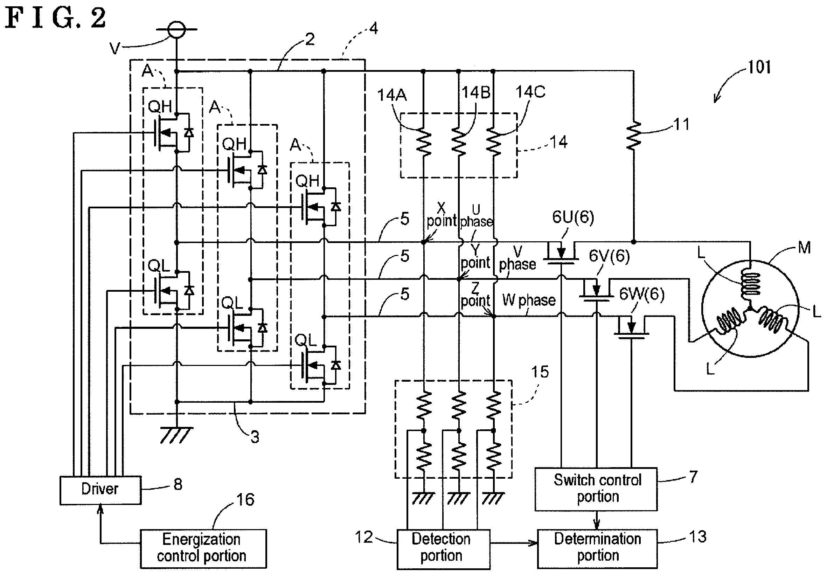

As shown in Fig. 2, the detection apparatus 101 in the second embodiment includes an inverter determination resistor 14 in the detection apparatus 1 of the first embodiment, which is different from the detection apparatus 1 in the first embodiment. Other than that, the configuration is the same as that of the first embodiment so that the difference will hereunder be mainly explained.

As illustrated in Fig. 2, the detection apparatus 101 in the second embodiment includes the inverter determination resistor 14 which is arranged between the first power supply line 2 and the terminals which are included in the three switches 6, respectively, and which are connected to the inverter 4. The first power supply line 2 corresponds to the cable connected to the power supply V as explained in the aforementioned first embodiment. The terminals which are included in the three switches 6, respectively, and which are connected to the inverter 4, correspond to the source terminals of the switches 6. In the second embodiment, as in the first embodiment, the switches 6 are provided at the three bus bars 5 connecting the three-phase motor M and the inverter 4. Thus, three of the inverter determination resistors 14 are provided. Specifically, the inverter determination resistors 14 are configured by a first inverter determination resistor 14A connecting the first power supply line 2 and the source terminal of the switch 6U, a second inverter determination resistor 14B connecting the first power supply line 2 and the source terminal of the switch 6V, and a third inverter determination resistor 14C connecting the first power supply line 2 and the source terminal of the switch 6W.

In this case, in a case where the high-side switching element QH, the low-side switching element QL, and the switch 6 are in the open state, and in a case where all of the high-side switching elements QH, the low-side switching elements QL, and the switch 6 do not cause the short circuit, the voltage of the source terminal of the switch 6 includes a value in which the output voltage of the power supply V is divided by the resistor included in the inverter determination resistor 14 and the resistor included in the resistors 15. Thus, in the second embodiment, the determination portion 13 previously memorizes the divided value of the voltage as a voltage of the terminal in a case where the three switches are in the open state.

When any of the three switches 6 causes the short circuit despite that the switch control portion 7 controls the three switches 6 to be in the open state, the voltage of a part detected by the detection portion 12 corresponds to greater than the previously-memorized, divided value because the inverter determination resistor 14 and the switch determination resistor 11 are connected with each other in a parallel manner. Accordingly, the determination portion 13 may determine that the switch 6 causes the short circuit in a case where the difference of the voltage previously memorized and the detection result of the detection portion 12 is greater than the previously set value (hereinafter referred to as a first value).

When the high-side switching element QH causes the short circuit despite that the switch control portion 7 controls the high-side switching element QH and the low-side switching element QL of the inverter 4 to be in the open state, the voltage of a part detected by the detection portion 12 corresponds to greater than the previously-memorized, divided value, and when the low-side switching element QL causes the short circuit, the voltage of the part detected by the detection portion 12 corresponds to lower than the previously-memorized, divided value (corresponds to zero volt). Accordingly, the determination portion 13 may determine that the high-side switching element QH causes the short circuit in a case where the difference between the preciously memorized voltage and the detection result of the detection portion 12 corresponds to greater than a value which is greater than the first value (hereinafter referred to as a second value). The determination portion 13 may determine that the low-side switching element QL causes the short circuit in a case where the detection result of the detection portion 12 corresponds to zero volt.

In a case where a detection apparatus is configured as the detection apparatus 101 of the second embodiment, it is favorable that the resistance value of the switch determination resistor 11 is set smaller than the resistance value of the inverter determination resistor 14 in some extent (for example, a half of the resistance value of the inverter determination resistor 14) in order to increase the difference between the resistance value of the inverter determination resistor 14 and a combined resistance value of the switch determination resistor 11 and the inverter determination resistor 14.

According to the aforementioned first and second embodiments, the detection apparatus 1, 101 may detect whether any of the three switches 6 causes the short circuit based on the detection result of the detection portion 12 in a case where the three switches 6 are controlled to be in the open state. Alternatively, as a third embodiment, whether the three-phase motor M and the bus bar 5 are appropriately connected to each other may be detected based on the detection result of the detection portion 12 in a case where the three switches 6 are controlled to be in the short-circuit state. Specifically, for example, each of the voltages of X point, Y point, and Z point (the voltages of the terminals of the source terminals of the three switches 6) is previously memorized in a case where all of the high-side switching elements QH and the low-side switching elements QL of the inverter 4 are controlled to be in the open state and the three switches 6 are controlled to be in the short-circuit state. Then, in a case where all of the high-side switching element QH and the low-side switching element QL of the inverter 4 are actually controlled to be in the open state and the three switches 6 are actually controlled to be in the short-circuit state, the determination portion may determine that the connection of the three-phase motor M and the bus bar 5 is inappropriate (for example, the connection failure or the breakage of the coil L) when the detection result of the detection portion 12 corresponds to smaller by equal to or greater than the predetermined value relative to the previously-memorized voltage. Here, it is favorable that the voltages of the terminals previously memorized are set at different values from one another per each of the three phases.

In the first and second embodiments, the switch determination resistor 11 is provided so as to pull up the electric potential of the drain terminal of the switch 6U to the output voltage of the power supply V. It is favorable that the switch determination resistor 11 is disposed between the first power supply line 2 and at least one of the three terminals which are included in the three-phase motor M. That is, the switch determination resistor 11 may be provided to pull up the electric potential of the drain terminal of the switch 6V to the output voltage of the power supply V, or of the switch 6W. In addition, the switch determination resistor 11 may be provided to pull up the electric potential of the drain terminal of the switch 6 of all phases, or any two of the electric potentials of the drain terminals of the switch 6U, the switch 6V, and the switch 6W.

The present disclosure is used for a detection apparatus detecting whether the switch which allows the three-phase motor and the inverter to be disconnected from each other is in a short-circuit state, the switch being inserted into each of the three bus bars in a serial manner, the three bus bars each connecting the three-phase motor and the inverter which drives the three-phase motor and which includes three sets of the arm portions each including the high-side switching element and the low-side switching element being connected with each other in a serial manner between the first power supply line and a second power supply line that is connected at the electric potential lower than the electric potential of the first power supply line.

## Claims

1. A detection apparatus (1, 101) configured to detect whether one of three switches (6, 6U, 6V, 6W) which allow a three-phase motor (M) and an inverter (4) to be disconnected from each other is in a short-circuit state,
wherein each one of the three switches (6, 6U, 6V, 6W) is inserted into each of three bus bars (5) in a serial manner, the three bus bars (5) each connecting the three-phase motor (M) and the inverter (4) which drives the three-phase motor (M) and which includes three sets of arm portions (A) each including a high-side switching element (QH) and a low-side switching element (QL) being connected with each other in a serial manner between a first power supply line (2) and a second power supply line (3) that is connected at an electric potential lower than an electric potential of the first power supply line (2),
the detection apparatus (1, 101) comprises:
a switch determination resistor (11) being provided between the first power supply line (2) and at least one of three terminals included in the three-phase motor (M); a switch control portion (7) configured to control the opening and closing of the switches;
a detection portion (12) configured to detect voltages of terminals which are included in the three switches (6, 6U, 6V, 6W), respectively, and which are connected to the inverter (4), and
a determination portion;
the detection apparatus (1, 101) being **characterised in that** said voltages of terminals correspond to voltages of the bus bars (5) at respective points (X, Y, Z) between the inverter and the switches (6U, 6V, 6W); and
the determination portion (13) is configured to previously memorize the voltages of the terminals of the three switches (6, 6U, 6V, 6W) being acquired in a state where the three switches (6, 6U, 6V, 6W) are in an open state, and to determine a switch in the short-circuit state among said three switches (6, 6U, 6V, 6W) based on the voltages of the terminals of the three switches (6, 6U, 6V, 6W) as previously memorized by said determination portion (13) and based on a detection result of the detection portion (12) in a case where the three switches (6, 6U, 6V, 6W) are controlled by the switch control portion (7) to be in the open state.

2. The detection apparatus (101) according to claim 1, further comprising an inverter determination resistor (14, 14A, 14B, 14C) being arranged between the first power supply line (2) and the terminals which are included in the three switches (6, 6U, 6V, 6W), respectively, and which are connected to the inverter (4).

3. The detection apparatus (101) according to claim 1 or 2, wherein the detection apparatus is configured such that the voltages of the terminals being previously memorized for each of the three switches are set at different values from one another.

## Patentansprüche

1. Detektionseinrichtung (1, 101), die dazu ausgestaltet ist, zu detektieren, ob sich einer von drei Schaltern (6, 6U, 6V, 6W), die ermöglichen, dass ein Dreiphasenmotor (M) und ein Wechselrichter (4) voneinander getrennt werden, in einem Kurzschlusszustand befindet,
wobei jeder der drei Schalter (6, 6U, 6V, 6W) in jede von drei Sammelschienen (5) in Reihe eingesetzt wird, wobei die drei Sammelschienen (5) jeweils den Dreiphasenmotor (M) und den Wechselrichter (4) verbinden, der den Dreiphasenmotor (M) antreibt und der drei Sätze von Armsektionen (A) beinhaltet, die jeweils ein High-Side-Schaltelement (QH) und ein Low-Side-Schaltelement (QL) beinhalten, die miteinander zwischen einer ersten Stromversorgungsleitung (2) und einer zweiten Stromversorgungsleitung (3) in Reihe geschaltet sind, die mit einem elektrischen Potenzial verbunden ist, das niedriger als ein elektrisches Potenzial der ersten Stromversorgungsleitung (2) ist,
wobei die Detektionseinrichtung (1, 101) umfasst:
einen Schalterbestimmungswiderstand (11), der zwischen der ersten Stromversorgungsleitung (2) und mindestens einem von drei Anschlüssen vorgesehen ist, die in dem Dreiphasenmotor (M) beinhaltet sind,
eine Schaltersteuerungssektion (7), die dazu ausgestaltet ist, das Öffnen und Schließen der Schalter zu steuern,
eine Detektionssektion (12), die dazu ausgestaltet ist, Spannungen von Anschlüssen zu detektieren, die jeweils in den drei Schaltern (6, 6U, 6V, 6W) beinhaltet sind, und die mit dem Wechselrichter (4) verbunden ist, und
eine Bestimmungssektion;
wobei die Detektionseinrichtung (1, 101) **dadurch gekennzeichnet ist, dass**
die Spannungen von Anschlüssen Spannungen der Sammelschienen (5) an jeweiligen Punkten (X, Y, Z) zwischen dem Wechselrichter und den Schaltern (6U, 6V, 6W) entsprechen,
und
die Bestimmungssektion (13) dazu ausgestaltet ist, zuvor die Spannungen der Anschlüsse der drei Schalter (6, 6U, 6V, 6W) zu speichern, die in einem Zustand erfasst wurden, in dem sich die drei Schalter (6, 6U, 6V, 6W) in einem offenen Zustand befinden, und einen Schalter in dem Kurzschlusszustand unter den drei Schaltern (6, 6U, 6V, 6W) auf Grundlage der Spannungen der Anschlüsse der drei Schalter (6, 6U, 6V, 6W), wie zuvor durch die Bestimmungssektion (13) gespeichert, und auf Grundlage eines Detektionsergebnisses der Detektionssektion (12) in einem Fall, bei dem die drei Schalter (6, 6U, 6V, 6W) durch die Schaltersteuerungssektion (7) gesteuert werden, in dem offenen Zustand zu sein, zu bestimmen.

2. Detektionseinrichtung (101) nach Anspruch 1, ferner umfassend einen Wechselrichterbestimmungswiderstand (14, 14A, 14B, 14C), der zwischen der ersten Stromversorgungsleitung (2) und den Anschlüssen angeordnet ist, die jeweils in den drei Schaltern (6, 6U, 6V, 6W) beinhaltet sind und die mit dem Wechselrichter (4) verbunden sind.

3. Detektionseinrichtung (101) nach Anspruch 1 oder 2, wobei die Detektionseinrichtung so ausgestaltet ist, dass die Spannungen der Anschlüsse, die zuvor für jeden der drei Schalter gespeichert wurden, auf voneinander verschiedene Werten eingestellt werden.

## Revendications

1. Appareil de détection (1, 101) configuré pour détecter si un de trois commutateurs (6, 6U, 6V, 6W) qui permettent à un moteur triphasé (M) et un onduleur (4) d'être déconnectés l'un de l'autre est dans un état de court-circuit, dans lequel chacun des trois commutateurs (6, 6U, 6V, 6W) est inséré dans chacune de trois barres omnibus (5) en série, les trois barres omnibus (5) connectant chacune le moteur triphasé (M) et l'onduleur (4) qui entraîne le moteur triphasé (M) et qui inclut trois ensembles de parties formant bras (A) incluant chacune un élément de commutation côté haut (QH) et un élément de commutation côté bas (QL) qui sont connectés l'un à l'autre en série entre une première ligne d'alimentation (2) et une seconde ligne d'alimentation (3) qui est connectée au niveau d'un potentiel électrique inférieur à un potentiel électrique de la première ligne d'alimentation (2),
l'appareil de détection (1, 101) comprend :
une résistance de détermination de commutateur (11) qui est fournie entre la première ligne d'alimentation (2) et au moins l'une de trois bornes incluses dans le moteur triphasé (M) ;
une partie de commande de commutateur (7) configurée pour commander l'ouverture et la fermeture des commutateurs ;
une partie de détection (12) configurée pour détecter des tensions de bornes qui sont incluses dans les trois commutateurs (6, 6U, 6V, 6W), respectivement, et qui sont connectées à l'onduleur (4), et
une partie de détermination ;
l'appareil de détection (1, 101) étant **caractérisé en ce que** lesdites tensions de bornes correspondent à des tensions des barres omnibus (5) au niveau de points respectifs (X, Y, Z) entre l'onduleur et les commutateurs (6U, 6V, 6W) ;
et la partie de détermination (13) est configurée pour mémoriser antérieurement les tensions des bornes des trois commutateurs (6, 6U, 6V, 6W) qui sont acquises dans un état où les trois commutateurs (6, 6U, 6V, 6W) sont dans un état ouvert, et pour déterminer un commutateur dans l'état de court-circuit parmi lesdits trois commutateurs (6, 6U, 6V, 6W) sur la base des tensions des bornes des trois commutateurs (6, 6U, 6V, 6W) telles que mémorisées antérieurement par ladite partie de détermination (13) et sur la base d'un résultat de détection de la partie de détection (12) dans un cas où les trois commutateurs (6, 6U, 6V, 6W) sont commandés par la partie de commande de commutateur (7) pour être dans l'état ouvert.

2. Appareil de détection (101) selon la revendication 1, comprenant en outre une résistance de détermination d'onduleur (14, 14A, 14B, 14C) qui est agencée entre la première ligne d'alimentation (2) et les bornes qui sont incluses dans les trois commutateurs (6, 6U, 6V, 6W), respectivement, et qui sont connectées à l'onduleur (4).

3. Appareil de détection (101) selon la revendication 1 ou 2, dans lequel l'appareil de détection est configuré de telle sorte que les tensions des bornes qui ont été mémorisées antérieurement pour chacun des trois commutateurs sont réglées sur des valeurs différentes les unes des autres.
